# EUROPEAN PATENT APPLICATION

(11) **EP 1 221 607 A1**
(43) Date of publication of application: **10.07.2002**
(21) Application number: 00961045.2
(22) Date of filing: 18.09.2000
(51) Int. Cl.: G01N 21/64, G01N 33/49

(54) **FLUORESCENT PARTICLE IMAGING DEVICE**

(30) Priority: 17.09.1999 JP 26314599
(71) Applicant: Kowa Kabushiki Kaisha, Nagoya-shi, Aichi 460-8625 (JP)
(72) Inventor: YABUSAKI, Katsumi, c/o Kowa Kabushiki Kaisha, Tsukuba-shi, Ibaraki 305-0856 (JP); NIINO, Masao, c/o Kowa Kabush Kaisha, Denkikogaku-, Gamagori-shi, Aichi 443-0041 (JP); MATSUI, Hiroki, Kowa Kabushi Kaisha, Denkikogaku-, Gamagorishi, Aichi 443-0041 (JP); ISHIKAWA, Muneharu, Kowa Kabushiki Kaisha, Tsukuba-shi, Ibaraki 305-0856 (JP); HIRONO, Taisuke, Kowa Kabushiki Kaisha, Tsukuba-shi, Ibararaki 305-0856 (JP)
(74) Representative: Sturt, Clifford Mark
(86) International application number: JP0006342
(87) International publication number: WO0122064

(57) **Abstract**

An imaging container (3) for containing fluorescent particles dyed with a fluorescent dye collectively at the bottom is provided. If the container contains a substance having a high transmittance to exciting light such as a blood platelet derivative or a diluted red blood cell derivative, a mirror (20) is removed from the optical path, and only the portion near the bottom of the container are irradiated from a side with the exciting light. Even if the solution in the container contains a fluorescent dye, the fluorescence is prevented from acting as disturbing light. If the container contains a substance having a low transmittance to exciting light such as a high-concentration red blood cell derivative, the mirror (20) is placed in the optical path, and the bottom of the container is irradiated from below. In this case, since transmittance is low, the exciting light reaches only the portion near the bottom, and fluorescence acting as background light is hardly produced. Even if the transmittance to the exciting light is different, illumination corresponding to the transmittance can be selected, and therefore the fluorescent particles can be counted correctly.

## Description

### Technical Field

The present invention relates to a fluorescent particle imaging device, and more particularly to a fluorescent particle imaging device that images fluorescent particles such as white blood cells dyed with a fluorescent dye.

### Background Art

In the field of medical treatment, since before, blood platelet derivatives and red blood cell derivatives are being manufactured by extracting blood platelets and red blood cells from blood. These blood platelet derivatives and red blood cell derivatives are each used for blood transfusions, and it is not desirable to have white blood cells mixed therein. For this reason, it is important to know the number of white blood cells that are mixed in with such derivatives. Conventionally, a sample of blood platelet derivative dyed with a fluorescent dye is placed on a slide glass plate referred to as a Nageotte chamber and irradiated with illuminating light and the number of white blood cells is counted using a microscope. Specifically, the number of white blood cells in a 50 microliter sample is counted and converted to the number of white blood cells in the whole bag. This is a time-consuming task that has to be performed by an experienced person, and is extremely inefficient and tiring.

JP 11-183382 A1 discloses a fluorescent particle imaging device as a device that performs these tasks efficiently. With this device, fluorescent particles (white blood cells) dyed with a fluorescent dye are contained collectively at the bottom of an imaging container, and only a portion near the bottom of the imaging container are irradiated with exciting light, exciting the fluorescent particles. Then, the bottom part of the imaging container is imaged from the bottom and the fluorescent particles are counted.

The means disclosed here are very useful when used for items such as blood platelet derivatives, blood plasma derivatives, spinal fluid that have a high transmittance to exciting light. Also, in the case of red blood cell derivatives, centrifugal force is used to separate red blood cells and white blood cells, and the removal rate is low, at around 10%, leaving a large quantity of white blood cells mixed in. In this case, the red blood cell derivative is diluted and the reduced number of white blood cells in a micro-sample is counted and, taking the dilution ratio into consideration, converted to a whole-bag white cell count. In this case the disclosed invention is useful because, even though it is a red blood cell derivative, there is a high transmittance to exciting light.

However, there is no need for dilution in the case of red blood cell derivative in which there is a low count of entrained white blood cells. This exhibits a low transmittance to exciting light, and the white blood cells collecting at the bottom are not uniformly irradiated by the exciting light, making it difficult to count them correctly.

Therefore, an object of the present invention is to provide a fluorescent particle imaging device that can correctly count the number of fluorescent particles even when the measurement target substance has a different transmittance to exciting light.

### Disclosure of Invention

In accordance with the present invention, to attain the above object, an imaging device for imaging fluorescent particles dyed with a fluorescent dye comprises an imaging container for containing fluorescent particles collectively at the bottom, means for producing exciting light that excites the fluorescent particles, first illumination means for irradiating only a portion near the bottom of the imaging container with the exciting light from a side, second illumination means for irradiating the bottom of the imaging container from the bottom with the exciting light, switching means for switching the first and second illumination means, and an imaging device for imaging, from the bottom, the bottom of the imaging container illuminated by the first or second illumination means.

If the container contains a substance having a high transmittance to exciting light such as a blood platelet derivative or a diluted red blood cell derivative and a portion is irradiated other than where the fluorescent particles are collected, the presence of fluorescent dye there too will result in background light that degrades the contrast of the obtained image. In such a case, it is therefore preferable to irradiate only the portion near the bottom of the container from the side.

On the other hand, if a substance having a low transmittance to exciting light such as a non-diluted, high-concentration red blood cell derivative is irradiated from the side, fluorescence will be obtained on the side of exciting light incidence, but the exciting light hardly reaches the opposite side, making it difficult to obtain sufficient fluorescence. It is therefore preferable to irradiate the bottom of the container from the bottom. In this case, the exciting light reaches only the portion near the bottom because of low transmittance, and hardly any fluorescence acting as background light is produced.

With the present invention, the illumination means are switched so that for a substance having a high transmittance to exciting light, only the portion near the bottom of the container are irradiated from the side with the exciting light, and for a substance having a low transmittance to exciting light, the bottom of the container is irradiated from the bottom with the exciting light. Thus, even if the transmittance of the measurement target substance to exciting light is different, the illumination means corresponding to the transmittance can be selected, enabling the fluorescent particles to be counted correctly.

### Brief Description of Drawings

Figure 1 is a view showing an schematic arrangement of a fluorescent particle imaging device.
Figure 2 is a frontal view showing a device for analyzing and displaying images of picked up fluorescent particles.

### Best Mode for Carrying out the Invention

The invention will be explained in detail below with reference to the embodiment as shown in Figures.

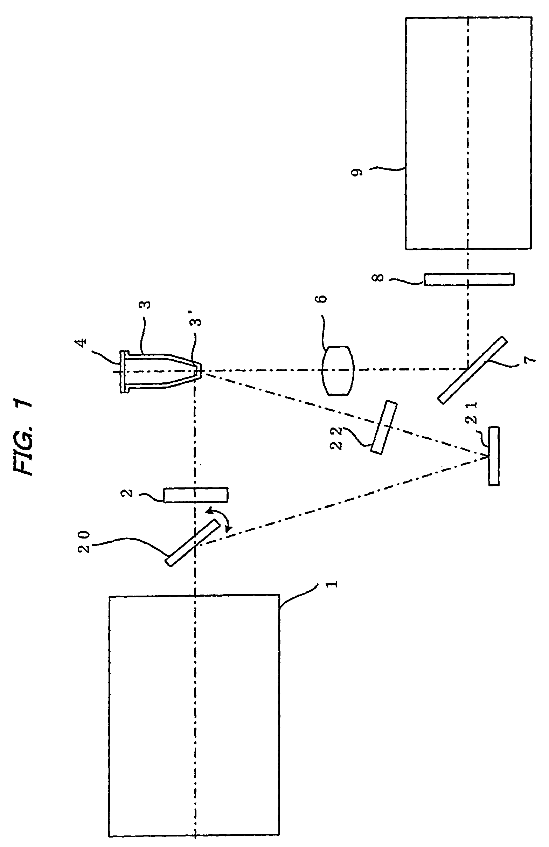

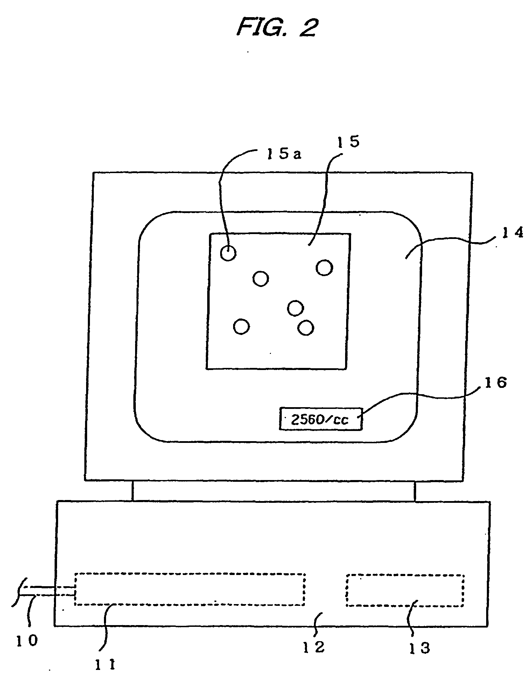

Figures 1 and 2 show an embodiment of the present invention. In the drawings, reference numeral 1 denotes a laser light source such as a YAG laser that produces a green-wavelength laser beam. A switchable mirror 20 removable from the optical path by a switching mechanism (not shown) is disposed on the optical path of the laser beam from the laser light source 1. When the switchable mirror 20 is removed from the optical path, the laser beam from the laser light source 1 falls incident on, and is diffused by, a member having a diffusing function such as a diffuser 2 constituted by ground glass or the like, and irradiates, from the side, the bottom 3' of an imaging container 3, the top of which is covered by a cover 4. Fluorescent particles are collected at the bottom of the imaging container 3. The irradiation of the fluorescent particles with the laser beam causes fluorescence to occur. An image of the fluorescent particles irradiated by the laser beam passes through an objective lens 6, is reflected by a mirror 7, and after passing through a barrier filter 8 that transmits light of a prescribed frequency band, is picked up by a CCD camera 9.

As shown, when the switchable mirror 20 is placed in the optical path, the exciting light from the laser light source 1 is reflected by the switchable mirror 20 and a mirror 21 and then diffused by a diffuser 22 similar to the diffuser 2 to irradiate the bottom of the imaging container 3 from below. The images of the fluorescent particles irradiated by the laser beam pass through the objective lens 6, are reflected by the mirror 7, and after passing through the barrier filter 8 that transmits light of the prescribed frequency band, are picked up by the CCD camera 9.

As shown in Figure 2, the images of the fluorescent particles picked up by the CCD camera 9 are input via a signal line 10 to a computer 12 by means of the computer's video capture facility 11. In the computer 12, the images are processed by an image processing circuit 13, whereby the fluorescent particles are recognized. This recognition is made possible by the fact that the presence of a fluorescent particle causes a change in brightness and the differentiation of signal values, for example, allows the coordinate position of fluorescent particles to be detected. The fluorescent particles thus recognized are displayed on a monitor 14. Figure 2 shows that an image 15 of the bottom of the container and a plurality of fluorescent particles 15a are displayed on the monitor 14. The number of fluorescent particles 15a is counted and the count value is also shown at the lower part 16 of the monitor 14.

The imaging container 3 is integrally formed of transparent polystyrene resin, glass or acrylic resin, but preferably polystyrene resin. Blood platelet derivative, for example, or diluted or non-diluted red blood cell derivative or the like can be placed in the imaging container 3. A chemical solution (Triton X (trademark)) for dissolving the cytoplasm of platelets and white blood cells, and a fluorescent dye (propidium iodide) to dye the cell nucleus of white blood cells, are also put into the imaging container 3. A centrifugal separator (not shown) is then used to bring the white blood cell nuclei to the bottom of the container 3. The application of a prescribed gravity G causes all white blood cell nuclei to be collected at the bottom 3' of the imaging container 3.

In such an arrangement, when a substance having a high transmittance to exciting light, such as a blood platelet derivative or a times-hundred dilution of a red blood cell derivative, is placed in the imaging container 3, the switchable mirror 20 is removed from the optical path and the laser light source 1 is switched on to irradiate only the portion near the bottom of the imaging container 3 with exciting light from the side. The white blood cells dyed with a fluorescent dye are collected at the bottom of the imaging container 3. The dyed nuclei of the white blood cells are therefore excited by the incident laser beam, producing the fluorescence at around 600 nm. The fluorescent light passes from the bottom of the container through the objective lens 6, the mirror 7 and the barrier filter 8 and is picked up by the CCD camera 9. The barrier filter 8 only transmits light in the fluorescence wavelength band, making it possible to block disturbing-wavelength light.

The laser beam only irradiates the bottom of the container where the fluorescent particles are collected, and effectively irradiates the white blood cells collected at the container bottom from the side. Therefore, even if fluorescent dye is suspended in the solution in the container 3, the fluorescence is prevented from acting as a disturbing background light, improving the contrast of the images that are picked up. As shown in Figure 2, the images of the fluorescent particles picked up by the CCD camera 9 are input via the signal line 10 to the computer 12 by means of the computer's video capture facility 11 and processed by an image processing circuit 13, providing an accurate count of the number of white blood cells 15a. Even better results can be obtained by providing shielding material around the container that shields portions other than the portion near the bottom of the container in order to irradiate only the portion near the bottom thereof.

When, on the other hand, the imaging container 3 contains a non-diluted, high-concentration red blood cell derivative, the switchable mirror 20 is inserted into the optical path so that the exciting light from the laser light source 1 may be reflected upwards by the mirror 21 to irradiate the bottom of the imaging container 3 from below with the exciting light. As a result, the white blood cells collected at the bottom of the container emit fluorescent light and, as in the case of irradiation from the side, the number of white blood cells is counted by counting the number of fluorescent particles. The exciting light is absorbed by a red blood cell derivative, which exhibits low transmittance thereof. Therefore, the exciting light reaches only the portion near the bottom and hardly any fluorescence acting as background light is produced even when it is irradiated from the bottom. This enables high-contrast images to be obtained and also enables the number of white blood cells to be counted correctly.

The above embodiment has been described with reference to a beam from a single laser light source that is switched by a switchable mirror to irradiate the bottom of the container from the side or from the bottom. Instead of this, separate laser light sources can be provided to effect irradiation from the side and irradiation from the bottom. In this case, when the bottom of the container is to be irradiated from the side the laser light source for that purpose would be switched on, and when the container is to be irradiated from the bottom the laser light source for that purpose would be switched on. Alternatively, both laser light sources could be switched on and a shutter or the like used to block one or the other laser beam to effect irradiation from the side or from the bottom.

### Industrial Applicability

As is clear from the foregoing explanation, in accordance with the present invention, for a substance having a high transmittance to exciting light, only the portion near the bottom of the container are irradiated from the side with the exciting light, and for a substance having a low transmittance to exciting light, the bottom of the container is irradiated from the bottom with the exciting light, so that even if the transmittance of the measurement target substance to exciting light is different, illumination corresponding to the transmittance can be selected, enabling the fluorescent particles to be counted correctly.

## Claims

1. An imaging device for imaging fluorescent particles dyed with a fluorescent dye, comprising:
an imaging container for containing the fluorescent particles collectively at the bottom;
means for producing exciting light that excites the fluorescent particles;
first illumination means for irradiating only a portion near the bottom of the imaging container with the exciting light from a side;
second illumination means for irradiating the bottom of the imaging container from the bottom with the exciting light;
switching means for switching the first and second illumination means; and
an imaging device for imaging, from the bottom, the bottom of the imaging container illuminated by the first or second illumination means.

2. The fluorescent particle imaging device according to claim 1, wherein the switching means is an optical element that in a first switch position guides the exciting light to a side of the imaging container bottom, and in a second switch position guides the exciting light to the bottom of the imaging container.

3. The fluorescent particle imaging device according to claim 1, wherein an exciting light source for side irradiation of the imaging container bottom and an exciting light source for bottom irradiation of the imaging container are provided, and the switching means is used to switch to the exciting light from one of the exciting light sources.
